# EUROPÄISCHE PATENTSCHRIFT

(11) **EP 3 036 649 B1**
(45) Veröffentlichungstag und Bekanntmachung des Hinweises auf die Patenterteilung: **01.08.2018**
(21) Anmeldenummer: 14730109.7
(22) Anmeldetag: 02.06.2014
(51) Int. Cl.: G06F 13/362, G06F 13/36, G06F 13/40

(54) **VERFAHREN UND SCHALTUNGSANORDNUNG ZUR ZEITLICHEN EINGRENZUNG UND TRENNUNG VON ZUGRIFFEN IN EINEM EIN-CHIP-SYSTEM**
METHOD AND CIRCUIT ARRANGEMENT FOR TEMPORALLY LIMITING AND SEPARATING ACCESS IN A SYSTEM ON A CHIP
PROCÉDÉ ET DISPOSITIF DE COMMUTATION POUR LA LIMITATION ET LA SÉPARATION DANS LE TEMPS D'ACCÈS DANS UN SYSTÈME MONOPUCE

(30) Priorität: 21.08.2013 DE 102013216505
(43) Veröffentlichungstag der Anmeldung: 29.06.2016
(73) Patentinhaber: Siemens AG Österreich, 1210 Wien (AT)
(72) Erfinder: EPPENSTEINER, Friedrich, A-3620 Spitz (AT); GHAMESHLU, Majid, A-1110 Wien (AT); TAUCHER, Herbert, A-2340 Mödling (AT)
(74) Vertreter: Maier, Daniel Oliver
(86) Internationale Anmeldenummer: PCT/EP2014/061322
(87) Internationale Veröffentlichungsnummer: WO 2015/024680

(56) Entgegenhaltungen:
- Andreas Eckel ET AL: "A Cross Domain Approach For Mixed Criticality Integration based on heterogeneous MPSoCs" A Platform Approach for Mixed Criticality Applications", , 30. August 2012 (2012-08-30), Seiten 1-37, XP055141714, Stockholm Gefunden im Internet: URL:https://www.kth.se/polopoly_fs/1.33576 1!/Menu/general/column-content/attachment/ 8_Eckel_ACROSS_MPSoCV2-TTTech.pdf [gefunden am 2014-09-22]
- ROMAN OBERMAISSER ET AL: "The time-triggered System-on-a-Chip architecture", 2008 IEEE INTERNATIONAL SYMPOSIUM ON INDUSTRIAL ELECTRONICS, 1. Juni 2008 (2008-06-01), Seiten 1941-1947, XP055141774, DOI: 10.1109/ISIE.2008.4677135 ISBN: 978-1-42-441665-3
- SORENSEN R B ET AL: "A light-weight statically scheduled network-on-chip", NORCHIP, 2012, IEEE, 12. November 2012 (2012-11-12), Seiten 1-6, XP032368643, DOI: 10.1109/NORCHP.2012.6403129 ISBN: 978-1-4673-2221-8

## Beschreibung

### Technisches Gebiet

Die vorliegende Erfindung betrifft allgemein das Gebiet der der elektronischen und logischen Schaltungen, insbesondere der so genannten anwendungsspezifischen, integrierten Schaltungen oder ASICs. Im Speziellen bezieht sich die vorliegende Erfindung auf ein Verfahren zur zeitlichen Eingrenzung und Trennung von Zugriffen zwischen zumindest einer Mastereinheit und zumindest einer Slave-Einheit über ein so genanntes Network-on-Chip-Bussystem in einem Ein-Chip-System sowie eine zugehörige Schaltungsanordnung. Dabei weist die Schaltungsanordnung zumindest eine Mastereinheit, zumindest eine untergeordnete Slave-Einheit sowie ein Network-on-Chip-Bussystem oder NoC für eine Verbindung zwischen Master- und Slave-Einheit auf. Die Zugriffe zwischen der zumindest einen Mastereinheit und der zumindest einen Slave-Einheit werden auf durch Busschnittstellen des Network-on-Chip-Bussystems vorgegebenen Kommunikationspfaden durchgeführt.

### Stand der Technik

Heutzutage bilden elektronische Schaltungen, welche als so genannte integrierte Schaltungen realisiert sind, eine wichtige Grundlage für jegliche Elektronik. Üblicherweise umfassen derartige elektronischen Schaltungen bzw. Systeme miteinander verdrahtete elektronische Bauelemente bzw. elektronische Schaltkreise oder so genannte Integrated Circuits (ICs), welche auf einem einzelnen Substrat (z.B. Halbleitersubstrat, etc.) untergebracht sind. Derartige integrierte Schaltungen bestehen nicht selten aus einer großen Anzahl an verschiedenartigen Bauelementen oder Schaltungsgruppen sowie verbindenden Leiterzügen auf oder in einem einkristallinen Substrat. Durch diese Integration können daher umfangreiche Funktionalitäten und Anwendungen auf einem kleinen Raum zur Verfügung gestellt werden. Dadurch wird eine Vielzahl von Anwendungen (z.B. in mobilen Geräten, SIM-Karten, RFIDs, Mobiltelefonen, etc.) erst technisch in einer einfachen und kostengünstigen Weise realisierbar. Integrierte Schaltungen, welche für spezielle Anwendungen erstellt worden sind, werden auch als anwendungsspezifische, integrierte Schaltungen oder ASICs (Application-Specific Integrated Circuits) bezeichnet.

Durch eine fortschreitende Verkleinerung von Geräten und einen steigenden Integrationsgrad werden mittlerweile ganze Systeme beispielsweise mit Prozessoren, Controllern, Speicherbausteinen (z.B. ROMs, RAMs, etc.), Power-Management und andere Komponenten auf einem so genannten Chip untergebracht. Derartige System werden auch als Ein-Chip-Systeme oder als System-on-Chip bezeichnet. Ein-Chip-Systeme werden dabei insbesondere dort eingesetzt, wo kleine Abmessungen bei relativ hoher Leistung und vielfältige Aufgaben gefragt sind. Bei einem Ein-Chip-System sind üblicherweise ein großer Teil der Funktionen des Systems auf einem Chip - d.h. auf einem Halbleitersubstrat - integriert. Entwürfe von derartigen Ein-Chip-Systemen basieren heutzutage häufig auf bereits vorhandenen und/oder zugekauften Komponenten - so genannten IP-Core-Einheiten oder IP-Blöcken wie z.B. Prozessor, Controller-Einheiten, Peripherieblöcke, etc., welche z.B. als fertige Einheit oder mittels Design-Lizenz für eine Verwendung in einem Ein-Chip-System erworben werden. Fehlende Einheiten für das Ein-Chip-System können dann für z.B. den fertigen ASIC dazu entwickelt werden.

Für eine Organisation der verschiedenen Einheiten sowie für eine Verteilung von Zugriffen, Aufgaben, etc. zwischen den Einheiten des Ein-Chip-Systems wird häufig das so genannte Master-Slave-Konzept verwendet. Dabei werden die jeweiligen Aufgaben zwischen übergeordneten Einheiten - den so genannten Mastereinheiten - und untergeordneten Einheiten - den so genannten Slave-Einheiten - verteilt und Zugriffe auf gemeinsame Ressourcen (z.B. Speichereinheiten, etc.) bzw. eine Nutzung eines Bussystems geregelt. Vorzüglicherweise kommt das Master-Slave-Konzept zur Anwendung, wenn von zumindest einer Einheit wie z.B. einem Prozessor, Controller, etc. als Mastereinheit eine Steuerung und/oder Aufgabenverteilung für zumindest eine andere Komponente (z.B. Spezialprozessoren, Peripherieeinheiten, etc.) übernommen oder Zugriffe auf zumindest eine andere Einheiten (z.B. Speichereinheiten, Bussysteme, etc.) geregelt wird.

Die Einheiten des Ein-Chip-Systems - also Master- und Slave-Einheiten - werden über ein Bussystem intern verbunden, wobei insbesondere bei komplexen Ein-Chip-Systemen hierarchische oder zumindest segmentierte Bussysteme eingesetzt werden. Ein derartiges Bussystem kann z.B. einen schnellen Systembus, einen langsameren Peripheriebus sowie einen Register- bzw. Steuerbus umfassen. Dabei stellt das so genannte Network-on-Chip-Bussystem oder NoC einen Ansatz für ein Design von flexiblen und effizienten Verbindungen für die Zugriffe zwischen den IP-Blöcken bzw. Master- und Slave-Einheiten (z.B. Prozessor, Controller-Einheiten, Peripherieblöcke, etc.) eines Ein-Chip-Systems dar. Bei einem Network-on-Chip-Bussystem werden die Informationen bzw. Zugriffe zwischen den einzelnen Einheiten des Ein-Chip-Systems nicht über eine internen Bus ausgetauscht, sondern über eine geschichtete Bus-Architektur, welche wie ein Netzwerk mit Verteilerstellen konzipiert ist. Ein Zugriff von einer Einheit auf eine andere Einheit des Ein-Chip-Systems auf einem Weg von einer Quell- zu einer Zieleinheit kann dabei z.B. als Punkt-zu-Punkt- oder als Mehrwegverbindung über mehrere Links geschaltet werden wie beispielsweise bei einem so genannte Routing in einem paketvermittelten Netzwerk. Über das Network-on-Chip-Bussystem werden Busteilnehmer mit Master- bzw. Slave-Funktionalität - d.h. so genannte Bus-Agents von Master- und/oder Slave-Einheiten - über entsprechende Busschnittstellen bzw. so genannte Ports - insbesondere Initiator Ports und Target Ports - verbunden. Diese Ports entsprechen Zugriffsadressen und können damit einen Kommunikationspfad von einer Quell- zu einer Zieleinheit über das Network-on-Chip-Bussystem vorgegeben und damit für das Routing herangezogen werden.

Häufig werden an Ein-Chip-Systeme auch hohe Sicherheitsanforderungen gestellt. Daher ist es notwendig, Zugriffe zwischen Master- und Slaveeinheiten über das Network-on-Chip-Bussystem zu kontrollieren oder gegebenenfalls z.B. gemäß aus der Luft- und Raumfahrtstechnik bekannten Sicherheitskonzepten räumlich und zeitlich zu einzugrenzen und zu trennen, um beispielsweise Anwendungen mit unterschiedlicher Sicherheitsrelevanz oder sicherheitsrelevante und nicht-sicherheitsrelevante Anwendungen auf einer Hardware-Plattform bzw. auf einem Ein-Chip-System ausgeführt zu können. Eine räumliche Eingrenzung und Trennung von Zugriffen über das Network-on-Chip-Bussystem (d.h. z.B., dass für sicherheitsrelevante Anwendungen (räumlich) andere Adressbereiche bzw. Busschnittstellen genutzt werden als für nicht-sicherheitrelevante) kann beispielsweise mit Unterstützung einer so genannten Memory Protection Unit (MPU) für kommerziell erhältliche Network-on-Chip-Bussysteme, welche derartige Sicherheitsmöglichkeiten üblicherweise nicht aufweisen, realisiert werden. Eine Memory Proctection Unit (MPU) ist z.B. bei am Markt erhältlichen CPU-Einheiten für Ein-Chip-System für eine Zugriffskontrolle integriert. Von der MPU werden neben anderen Aufgaben beispielsweise Speicherschutzaufgaben geregelt und es können damit Zugriffe auf einzelne Speicherbereiche oder z.B. Busschnittstellen oder Ports des Network-on-Chip-Bussystems kontrolliert bzw. für bestimmte Einheiten oder Zugriffsarten (z.B. Schreibzugriffe, etc.) gesperrt werden. Allerdings wird durch eine MPU z.B. keine zeitliche Eingrenzung, Kontrolle und/oder Trennung von Zugriffen bei am Markt erhältlichen Network-on-Chip-Bussystemen ermöglicht.

Zeitliche Trennungen von Zugriffen auf einzelne Busschnittstellen bzw. Adressbereiche des Network-on-Chip-Bussystems wurden bisher beispielsweise nur in anwendungsspezifischen proprietären Lösungen realisiert wie z.B. bei einem so genannten Time Triggered Network-on-Chip, welches z.B. im Rahmen des Forschungsprojektes ACROSS entwickelt worden ist und welche z.B. in der Schrift Schoeberl, Martin. "A Time-Triggered Network-on-Chip", Institute of Computer Engineering, Vienna University of Technology, Austria, 2007. beschrieben ist. Diese Schrift beschreibt ein zeitgetriggertes Network-on-Chip für ein On-Chip-Echtzeitsystem, wobei vom Network-on-Chip eine zeitlich vorhersagbare On- und Off-Chip-Kommunikation zur Verfügung gestellt wird. Dabei wird die so genannte Time-Triggered-Architektur aus dem Bereich der Echtzeitsysteme auf einen Chip-interne Kommunikation bzw. das Network-on-Chip-Bussystem angewendet. Allerdings wird hier das Network-on-Chip-Bussystem speziell für die Anforderungen des Echtzeitsystems bzw. für das spezielle Ein-Chip-System entworfen und entwickelt. Dies weist allerdings den Nachteil von längeren Entwicklungszeiten, höheren Aufwendungen und Kosten auf, da keine am Markt erhältlichen Network-on-Chip-Bussysteme eingesetzt werden können. Dies bedeutet auch, dass für Ein-Chip-Systeme, bei welchen aus Sicherheitsgründen und/oder technischen Gründen einen zeitliche Eingrenzung und Trennung von Zugriffen über das Network-on-Chip-Bussystem erforderlich ist, dieses speziell entwickelt werden muss.

### Darstellung der Erfindung

Der Erfindung liegt daher die Aufgabe zugrunde, ein Verfahren sowie eine Schaltanordnung anzugeben, durch welche auf einfache Weise ohne zusätzlichen Aufwand Zugriffe zwischen Master- und Slave-Einheiten über ein Standard-Network-on-Chip-Bussystem zeitlich eingrenzt und/oder getrennt werden.

Diese Aufgabe wird durch ein Verfahren sowie durch eine Schaltanordnung der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem ein Network-on-Chip-Bussystem, insbesondere ein kommerziell erhältliches, Standard-Network-on-Chip-Bussystem, durch eine Anpassungseinheit, welche einen zentralen Zugriffsmanager sowie eine Ergänzungslogik für die Busschnittstellen bzw. Ports des Network-on-Chip-Bussystems umfasst, erweitert wird. Diese Anpassungseinheit für das Network-on-Chip-Bussystem sowie Ergänzungslogik für die Busschnittstellen werden dann vom Zugriffsmanager derart anhand eines Kommunikationsplans angesteuert, dass Zugriffe zwischen der zumindest eine Mastereinheit und der zumindest eine Slave-Einheit über die jeweils durch die Busschnittstellen bzw. Ports des Network-on-Chip-Bussystems vorgegebenen Kommunikationspfade gemäß zeitlicher Vorgaben des Kommunikationsplans durchgeführt werden.

Der Hauptaspekt des erfindungsgemäß vorgeschlagenen Verfahrens besteht darin, dass ohne großen Aufwand - es muss z.B. kein spezielles, anwendungsspezifisches Bussystem entwickelt werden - zeitgesteuerte Ein-Chip-Systeme oder logische Schaltungen mit am Markt erhältlichen Standard-Lösungen für Bussysteme realisiert werden können. Durch das erfindungsgemäße Verfahren werden auf einfache Weise die Zugriffe von Busteilnehmern - d.h. von Master- und Slave-Einheiten des Ein-Chip-Systems - über die Busschnittstellen durch zeitliche Vorgaben eingrenzt bzw. getrennt. Damit können einerseits auch Echtzeitsystem besser und einfacher realisiert werden, da zeitkritischen Anwendungen oder Einheiten durch die zeitlichen Vorgaben Zugriffe garantiert werden können. Andererseits können durch die zeitliche Eingrenzung und Trennung der Zugriffe Standards für Angriffs- und Betriebssicherheit von Ein-Chip-Systemen besser und effizienter erfüllt werden, da durch die zeitlichen Vorgaben z.B. Zugriffe von sicherheitsrelevanten und nicht oder weniger sicherheitsrelevanten Anwendungen zeitlich getrennt werden können.

Dabei ist es weiterhin von Vorteil, wenn durch den Kommunikationsplan als zeitliche Vorgaben für die Zugriffe Zeitfenster vorgegeben werden, innerhalb welcher jeweils eine Nutzung eines jeweiligen durch die Busschnittstellen vorgegebenen Kommunikationspfads im Network-on-Chip-Bussystem für Zugriffe zugelassen wird. Durch eine Nutzung von Zeitfenstern als zeitliche Vorgaben des Kommunikationsplans können sehr einfach für Anwendungen und/oder Busteilnehmer garantierte Zeiträume für Zugriffe zur Verfügung gestellt werden. Auf diese Weise können vor allem Echtzeitsysteme besser und einfacher entwickelt werden. Durch die im Kommunikationsplan vorgegebenen Zeitfenster werden z.B. zeitkritischen Anwendungen garantierte Zeitfenster zugewiesen und damit Zeitverzögerungen bei Zugriffen auf das Network-on-Chip-Bussystem bzw. auf dessen Busschnittstellen verhindert.

Durch das erfindungsgemäße Verfahren werden idealer Weise Mastereinheiten beispielsweise mittels einer Fehlernachricht wie z.B. Retry an einem temporär - aufgrund der zeitlichen Vorgaben bzw. der im Kommunikationsplan vorgegebenen Zeitfenster - nicht erlaubten Zugriff auf eine oder mehrere Slave-Einheiten gehindert. Der Zugriff kann dann z.B. in einem Zeitfenster, in welchen er zulässig ist, wiederholt bzw. erfolgreich durchgeführt werden. Zugriffe von Seiten einer oder mehrerer Slave-Einheiten, welche z.B. nicht rechtzeitig bzw. innerhalb der im Kommunikationsplan vorgegebenen zeitlichen Vorgaben abgeschlossen werden, können ebenfalls mit einer Fehlernachricht wie z.B. Retry beendet werden. Durch die Fehlernachricht ist dann im System bekannt, dass der entsprechende Slave-seitige Zugriff nicht erfolgreich abgeschlossen wurde. Der Zugriff kann dann ebenfalls in einem Zeitfenster, in welchen er wieder zulässig ist, wiederholt bzw. entsprechend erfolgreich beendet werden. Damit wird ein Zeitverhalten des Ein-Chip-Systems besser einschätzbar.

Es ist günstig, wenn der Kommunikationsplan in einer System-Initialisierungsphase z.B. von einem Prozessor oder einer Konfigurationsmastereinheit an den Zugriffsmanager übertragen wird. Im Anschluss an die System-Initialisierungsphase kann dann idealer Weise die Ergänzungslogik der Anpassungseinheit vom Zugriffsmanager aktiviert werden. Das bedeutet, es wird bereits in der Intialisierungsphase, in welcher z.B. auch das Ein-Chip-System konfiguriert wird, der Kommunikationsplan mit den zeitlichen Vorgaben für die Zugriffe auf dem Zugriffsmanager abgespeichert. Der Kommunikationsplan kann z.B. während einer System-Designphase festgelegt werden. Für die Steuerung der Zugriffe der Busteilnehmer - Master- und Slave-Einheiten - wird dann die Ergänzungslogik für die Busschnittstellen, welche im Prinzip Zugriffsadressen auf das Network-on-Chip-Bussystem entsprechen, und durch welche die Kommunikationspfade für die Zugriffe bestimmt werden, aktiviert. Damit kann dann im Betrieb des Ein-Chip-Systems einen Kommunikation an den Busschnittstellen sehr einfach gemäß dem Kommunikationsplan bzw. gemäß der darin festgelegten zeitlichen Vorgaben zugelassen oder verhindert werden. Vom Kommunikationsplan, welcher vom Zugriffsmanager verwaltet wird, wird z.B. festgelegt, innerhalb welchem Zeitfenster an den Busschnittstellen - an den so genannten Intiator Ports und Target Ports - des Network-on-Chip-Bussystems Kommunikation stattfinden darf.

Des Weiteren empfiehlt es sich auch, wenn der Zugriffsmanager durch einen Schutzfunktion beispielsweise vor Manipulationen, unerlaubten Änderungen, etc. geschützt wird. Auf diese Weise kann der Zugriffsmanager bzw. der auf den Zugriffsmanager übertragene Kommunikationsplan auf sehr einfache Weise vor Manipulationen oder ungewünschten Änderungen z.B. während des Einsatzes des Ein-Chip-Systems bzw. der logischen Schaltung geschützt werden. Weiterhin wird dadurch auch die Sicherheit des Ein-Chips-Systems weiter gesteigert.

Weiterhin wird die Aufgabe mit einer Schaltanordnung zur Durchführung des erfindungsgemäßen Verfahrens gelöst. Diese Schaltanordnung, durch welche eine zeitliche Eingrenzung und Trennung von Zugriffen in einem so genannten Ein-Chip-System anhand des erfindungsgemäßen Verfahren durchgeführt wird, besteht aus zumindest einer Mastereinheit, zumindest einer Slave-Einheit sowie einem Network-on-Chip-Bussystem zur Verbindung von Master- und Slave-Einheiten, welches z.B. kommerziell erhältlich und standardmäßig aufgebaut ist, und Busschnittstellen umfasst. Weiterhin ist bei der erfindungsgemäßen Schaltungsanordnung das Network-on-Chip-Bussystem durch eine Anpassungseinheit erweitert, welche einen Zugriffsmanager für eine zentrale und zeitliche Steuerung der Zugriffe zwischen der zumindest einen Mastereinheit mittels eines Kommunikationsplans und der zumindest einen Slave-Einheit sowie eine Ergänzungslogik für eine Erweiterung und Kommunikationssteuerung der Busschnittstellen der Network-on-Chip-Bussystems umfasst.

Die mit der erfindungsgemäßen Schaltungsanordnung erzielbaren Vorteile bestehen insbesondere darin, dass ohne großen Aufwand z.B. bei Design und Entwicklung zeitgesteuerte Ein-Chip-Systeme entwickelt und realisiert werden können, wobei kommerziell erhältliche Standard-Lösungen für Bussysteme, insbesondere Network-on-Chip-Bussysteme, eingesetzt werden können. Durch eine zeitliche Regelung und Steuerung der Zugriffe in der erfindungsgemäßen Schaltungsanordnung können auch ohne großen Entwicklungsaufwand Echtsysteme mit der erfindungsgemäßen Schaltungsanordnung einfacher und besser realisiert werden. Weiterhin kann durch die zeitliche Eingrenzung und Trennung von Zugriffen z.B. bei Ein-Chip-Systemen und/oder logischen Schaltungen durch Einsatz der erfindungsgemäßen Schaltungsanordnung eine höhere Angriffs- und Betriebssicherheit erzielt werden.

Idealer Weise ist der Kommunikationsplan, durch welchen Zeitfenster für Zugriffe vorgegebenen werden, in einer System-Initialisierungsphase in den Zugriffsmanager ladbar. Nach der System-Intitialisierungsphase ist dann die Ergänzungslogik durch den Zugriffsmanager aktivierbar. Damit kann der Kommunikationsplan bereits in einer Design- und Entwicklungsphase entsprechend der jeweiligen Anwendung der erfindungsgemäßen Schaltungsanordnung vorgegeben und definiert werden. Die Ergänzungslogik, durch welche direkt an den Busschnittstellen bzw. Ports des Network-on-Chip-Bussystems die Kommunikation vor allem überwacht, geregelt bzw. zugelassen oder verhindert wird, idealer Weise dann aktiviert, wenn ein festgelegter Kommunikationsplan und damit die zeitlichen Vorgaben für die Kommunikationssteuerung an den Busschnittstellen bzw. Ports im Zugriffsmanager zur Verfügung stehen.

Es ist auch von Vorteil, wenn der Zugriffsmanager eine Schutzfunktion vor allem gegen Manipulationen, unerlaubte Änderungen, etc. aufweist. Auf diese Weise wird die Sicherheit der erfindungsgemäßen Schaltungsanordnung zusätzlich erhöht, da damit insbesondere der Kommunikationsplan vor unerlaubten und/oder unerwünschten Änderungen geschützt wird.

### Kurzbeschreibung der Zeichnung

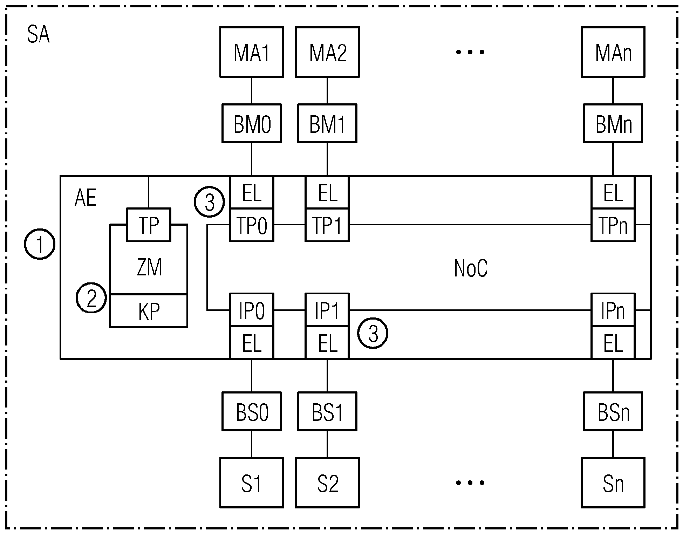

Die Erfindung wird nachfolgend in beispielhafter Weise anhand der beigefügten Figur erläutert. Figur 1 zeigt dabei in beispielhafter und schematischer Weise eine Schaltanordnung zur Durchführung eines Verfahrens zur zeitlichen Eingrenzung und Trennung von Zugriffen in einem Ein-Chip-System sowie einen Ablauf dieses erfindungsgemäßen Verfahrens.

### Ausführung der Erfindung

Figur 1 zeigt in schematischer und beispielhafter Weise eine Schaltanordnung SA zur Durchführung des erfindungsgemäßen Verfahrens zur zeitlichen Eingrenzung und Trennung von Zugriffen in einem Ein-Chip-System. Die erfindungsgemäße Schaltungsanordnung umfasst dabei zumindest einen Mastereinheit MA1, MA2, ..., MAn wie z.B. Prozessoren, Controller, Spezialprozessoren, etc. sowie zumindest eine Slave-Einheit S1, S2, ..., Sn wie z.B. Speichereinheiten, etc. Weiterhin weist die erfindungsgemäße Schaltungsanordnung SA ein Network-on-Chip-Bussystem NoC auf, welches beispielsweise eine am Markt erhältliche Standard-Lösung für Bussysteme ist.

Über das Network-on-Chip-Bussystem NoC werden Bussteilnehmer - d.h. Mastereinheiten M1, M2, ..., Mn und Slave-Einheiten S1, S2, ..., Sn - über entsprechende Busschnittstellen oder Ports TP0, TP1, ..., TPn bzw. IP0, IP1, ..., IP2 verbunden. Die Busschnittstellen TP0, TP1, ..., TPn bzw. IP0, IP1, ..., IP2 sind beim Network-on-Chip-Bussystem NoC vorgesehen. Dabei werden die jeweiligen Mastereinheiten MA1, MA2, ..., MAn über so genannte masterseitige Bus Agents BM0, BM1, ..., BMn mit so genannten Master Interface Ports an die entsprechenden Busschnittstellen TP0, TP1, ..., TPn - die so genannten Target Ports - des Network-on-Chip-Bussystems NoC angebunden. Slave-seitig werden ebenfalls die jeweiligen Slave-Einheiten S1, S2, ..., Sn über slave-seitige Bus Agents BS0, BS1, ..., BSn mit so genannten Slave Interface Ports an die jeweiligen Busschnittstellen IP0, IP1, ..., IPn - die so genannten Initiator Ports - des Network-on-Chip-Bussystems NoC angebunden. Über die Busschnittstellen bzw. Ports TP0, TP1, ..., TPn bzw. IP0, IP1, ..., IP2, welche im Prinzip Zugriffsadressen für eine Weiterleitung von Daten/Informationen zwischen den Busteilnehmern MA1, MA2, ..., MAn bzw. S1, S2, ..., Sn entsprechen, werden Kommunikationspfade für die Zugriffe von Master- und Slave-Einheiten MA1, MA2, ..., MAn bzw. S1, S2, ..., Sn definiert.

Weiterhin ist bei der erfindungsgemäße Schaltungsanordnung SA das Network-on-Chip-Bussystem NoC mit einer Anpassungseinheit AE erweitert. Diese Anpassungseinheit AE kann beispielsweise als so genannter Interface Wrapper realisiert sein, durch welchen z.B. für Anwendungen eine Schnittstelle in eine andere Schnittstelle übersetzt wird. Die Anpassungseinheit AE für das Network-on-Chip-Bussystem NoC umfasst dabei einen zentralen Zugriffsmanager ZM sowie eine Ergänzungslogik EL für die jeweiligen Busschnittstellen TP0, TP1, ..., TPn bzw. IP0, IP1, ..., IP2 des Network-on-Chip-Bussystems. Die Ergänzungslogik ist dabei z.B. bei den jeweiligen Busschnittstellen TP0, TP1, ..., TPn bzw. IP0, IP1, ..., IP2 zwischen diesen und einer Anbindung der jeweiligen Bus Agents BM0, BM1, ..., BMn bzw. BS0, BS1, ..., BSn vorgesehen.

Vom zentralen Zugriffsmanager ZM wird ein Kommunikationsplan KP verwaltet. Anhand von im Kommunikationsplan KP definierten zeitlichen Vorgaben werden dann vom Zugriffsmanager ZM Zugriffe von Master- und Slave-Einheiten MA1, MA2, ..., MAn bzw. S1, S2, ..., Sn über die von den Busschnittstellen TP0, TP1, ..., TPn bzw. IP0, IP1, ..., IP2 vorgegebenen Kommunikationspfade entsprechend zeitlich gesteuert. Als zeitliche Vorgaben können im Kommunikationsplan KP Zeitfenster z.B. in einer Design- oder Entwicklungsphase definiert werden, innerhalb welcher eine Nutzung der Busschnittstellen TP0, TP1, ..., TPn bzw. IP0, IP1, ..., IP2 zulässig ist bzw. innerhalb welcher eine Kommunikation an den Busschnittstellen TP0, TP1, ..., TPn bzw. IP0, IP1, ..., IP2 durchgeführt werden darf. Der Kommunikationsplan KP wird während einer System-Initialisierungsphase beispielsweise von einem Prozessor oder einer Konfigurationsmastereinheit an den Zugriffsmanager ZM übergeben. Dazu weist der Zugriffsmanager ZM eine eigene Schnittstelle bzw. ein eigenes Target Port TP auf. Erst nach einer Übertragung des Kommunikationsplans KP bzw. nach der System-Initialisierungsphase wird die Ergänzungslogik EL an den Busschnittstellen TP0, TP1, ..., TPn bzw. IP0, IP1, ..., IP2 des Network-on-Chip-Bussystems NoC aktiviert und eine zeitliche Eingrenzung und Trennung der Zugriffe kann durchgeführt werden. Um den Zugriffsmanager ZM und damit den Kommunikationsplan KP vor z.B. Manipulationen, unerlaubten Änderungen, etc. zu schützen, weist der Zugriffsmanager einen Schutzfunktion auf.

Für die Durchführung des erfindungsgemäßen Verfahrens zum Eingrenzen und Trennen von Zugriffen zwischen Mastereinheiten MA1, MA2, ..., MAn und Slave-Einheiten S1, S2, ..., Sn bzw. von Mastereinheiten MA1, MA2, ..., MAn und von Slave-Einheiten S1, S2, ..., Sn über das Network-on-Chip-Bussystem NoC im Ein-Chip-System wird in einem ersten Verfahrensschritt 1 das Network-on-Chip-Bussystem NoC mit einer Anpassungseinheit AE, insbesondere in Form eines Interface Wrappers, erweitert. Dann wird in einem zweiten Verfahrensschritt 2 die Ergänzungslogik EL der Anpassungseinheit AE und damit die Anpassungseinheit AE selbst vom zur Anpassungseinheit AE gehörenden zentralen Zugriffsmanager ZM anhand eines Kommunikationsplans KP gesteuert. Der Kommunikationsplan KP, welcher in der System-Initialisierungsphase auf den Zugriffsmanager ZM geladen wird, beinhaltet zeitliche Vorgaben in Form von Zeitfenstern, von welchen eine zeitliche Zulässigkeit von Zugriffen bzw. Kommunikation an den Busschnittstellen TP0, TP1, ..., TPn bzw. IP0, IP1, ..., IP2 vorgegeben wird.

Anhand der zeitlichen Vorgaben bzw. anhand der Zeitfenster im Kommunikationsplan KP können dann in einem dritten Verfahrensschritt 3 die Busschnittstellen TP0, TP1, ..., TPn bzw. IP0, IP1, ..., IP2 des Network-on-Chip-Bussystems NoC über die Ergänzungslogik EL derart angesteuert werden, dass Zugriffe über die jeweiligen durch die Busschnittstellen TP0, TP1, ..., TPn bzw. IP0, IP1, ..., IP2 vorgegebenen Kommunikationspfade nur gemäß den zeitlichen Vorgaben bzw. innerhalb der entsprechenden Zeitfenster durchgeführt werden. Das bedeutet, durch den Kommunikationsplan KP bzw. die darin festgelegten Zeitfenster wird definiert, wann eine Kommunikation an den jeweiligen Busschnittstellen TP0, TP1, ..., TPn bzw. IP0, IP1, ..., IP2 bzw. den Target Ports TP0, TP1, ..., TPn und den Initiator Ports IP0, IP1, ..., IP2 des Network-on-Chip-Bussystems NoC stattfinden darf.

Zugriffe, welche aufgrund der zeitlichen Vorgaben des Kommunikationsplans (KP) nicht erfolgreich ausgeführt werden, werden mit einer Fehlernachricht wie z.B. einem Retry abgeschlossen. D.h. Mastereinheiten MA1, MA2, ..., MAn werden beispielsweise mittels Fehlernachricht (z.B. Retry) an einem aufgrund des Kommunikationsplans KP temporäre nicht zulässigen Zugriff gehindert. Slave-seitig werden Zugriffe, welche nicht rechtzeitig abgeschlossen werden können, ebenfalls mit einer Fehlernachricht wie z.B. Retry beendet.

Aufgrund der Erweiterung des Network-on-Chip-Bussystems NoC mit der Anpassungseinheit AE mit zugehörigem Zugriffsmanager ZM und Ergänzungslogik EL für die Busschnittstellen TP0, TP1, ..., TPn bzw. IP0, IP1, ..., IP2 können sehr einfach und ohne großen Aufwand zeitgesteuerte System mit Standard-Bussystemen realisiert und Echtzeitsysteme einfacher entwickelt werden.

## Patentansprüche

1. Verfahren zur zeitlichen Eingrenzung und Trennung von Zugriffen zwischen zumindest einer Mastereinheit (MA1, MA2, ..., MAn) und zumindest einer Slave-Einheit (S1, S2, ..., Sn) über ein so genanntes Network-on-Chip-Bussystem (NoC) in einem Ein-Chip-System, wobei die Zugriffe zwischen der zumindest einen Mastereinheit (MA1, MA2, ..., MAn) und der zumindest einen Slave-Einheit über Kommunikationspfade durchgeführt werden, welche durch Busschnittstellen (TP0 bis TPn, IP0 bis IPn) des Network-on-Chip-Bussystems (NoC) vorgegeben werden, **dadurch gekennzeichnet, dass** das Network-on-Chip-Bussystem (NoC) durch eine Anpassungseinheit (AE) erweitert wird, von welcher ein zentraler Zugriffsmanager (ZM) und Ergänzungslogik (EL) für die Busschnittstellen (TP0 bis TPn, IP0 bis IPn) umfasst werden (1), und dass dann die Anpassungseinheit (AE) und die Busschnittstellen (TP0 bis TPn, IP0 bis IPn) über die Ergänzungslogik (EL) vom zentralen Zugriffsmanager (ZM) anhand eines im zentralen Zugriffsmanager (ZM) verwalteten Kommunikationsplans (KP) derart gesteuert werden (2), dass Zugriffe zwischen der zumindest einen Mastereinheit (MA1, MA2, ..., MAn) und der zumindest einen Slave-Einheit (S1, S2, ..., Sn) über die jeweils durch die Busschnittstellen (TP0 bis TPn, IP0 bis IPn) vorgegebenen Kommunikationspfade gemäß zeitlicher Vorgaben des Kommunikationsplans (KP) durchgeführt werden (3) .

2. Verfahren nach Anspruch 1, **dadurch gekennzeichnet, dass** durch den Kommunikationsplan (KP) als zeitliche Vorgaben Zeitfenster definiert werden, innerhalb welcher jeweils eine Nutzung eines jeweiligen durch die Busschnittstellen (TP0 bis TPn, IP0 bis IPn) vorgegebenen Kommunikationspfades für Zugriffe zugelassen wird (3).

3. Verfahren nach einem der Ansprüche 1 bis 2, **dadurch gekennzeichnet, dass** Zugriffe, welche aufgrund der zeitlichen Vorgaben des Kommunikationsplans (KP) nicht erfolgreich ausgeführt werden, mit einer Fehlernachricht abgeschlossen werden (3).

4. Verfahren nach einem der Ansprüche 1 bis 3, **dadurch gekennzeichnet, dass** der Kommunikationsplan (KP) in einer System-Initialisierungsphase an den Zugriffsmanager (ZM) übertragen wird.

5. Verfahren nach einem der Ansprüche 1 bis 3, **dadurch gekennzeichnet, dass** die Ergänzungslogik (EL) erst nach der System-Initalisierungsphase vom Zugriffsmanager (ZM) aktiviert wird.

6. Verfahren nach einem der Ansprüche 1 bis 4, **dadurch gekennzeichnet, dass** der Zugriffsmanager (ZM) durch eine Schutzfunktion geschützt wird.

7. Schaltungsanordnung (SA) für eine zeitliche Eingrenzung und Trennung von Zugriffen in einem so genannten Ein-Chip-System zur Durchführung des erfindungsgemäßen Verfahrens nach den Ansprüchen 1 bis 5, bestehend aus zumindest einer Mastereinheit (MA1, MA2, ..., MAn), zumindest einer Slave-Einheit (S1, S2, ..., Sn) und einem so genannten Network-on-Chip-Bussystem (NoC) mit Busschnittstellen (TPO bis TPn, IP0 bis IPn) zur Verbindung von Master- und Slave-Einheiten (MA1, MA2, ..., MAn, S1, S2, ..., Sn), **dadurch gekennzeichnet, dass** das Network-on-Chip-Bussystem (NoC) mit einem Anpassungseinheit (AE) erweitert ist, und dass die Anpassungseinheit (AE) aus einem zentralen Zugriffsmanager (ZM) zur zentralen und zeitlichen Steuerung der Zugriffe mittels eines im Zugriffsmanager (ZM) verwalteten Kommunikationsplans (KP) und einer Ergänzungslogik (EL) für die Busschnittstellen (TPO bis TPn, IP0 bis IPn) des Network-on-Chip-Bussystems (NoC) besteht.

8. Schaltungsanordnung nach Anspruch 7, **dadurch gekennzeichnet, dass** in einer System-Initialisierungsphase der Kommunikationsplan (KP) in den Zugriffsmanager (ZM) ladbar ist, und dass die Ergänzungslogik (EL) durch den Zugriffsmanager (ZM) aktivierbar ist.

9. Schaltungsanordnung nach einem der Ansprüche 7 bis 8, **dadurch gekennzeichnet, dass** der Zugriffsmanager (ZM) eine Schutzfunktion gegen Manipulationen aufweist.

## Claims

1. Method for temporally limiting and separating access instances between at least one master unit (MA1, MA2,..., MAn) and at least one slave unit (S1, S2, ..., Sn) via a so-called network-on-a-chip bus system (NoC) in a system-on-a-chip, wherein the access instances between the at least one master unit (MA1, MA2,..., MAn) and the at least one slave unit are carried out via communication paths, which are defined by bus interfaces (TP0 to TPn, IP0 to IPn) of the network-on-a-chip bus system (NoC), **characterised in that** the network-on-a-chip bus system (NoC) is expanded (1) by an adaptation unit (AE), which comprises a central access manager (ZM) and complementary logic (EL) for the bus interfaces (TPO to TPn, IP0 to IPn) and **in that** the adaptation unit (AE) and the bus interfaces (TPO to TPn, IP0 to IPn) are then controlled (2) by the central access manager (ZM) via the complementary logic (EL) on the basis of a communication plan (KP) managed in the central access manager (ZM), such that access instances between the at least one master unit (MA1, MA2,..., MAn) and the at least one slave unit (S1, S2, ..., Sn) are carried out (3) via the communication paths respectively defined by the bus interfaces (TPO to TPn, IP0 to IPn) according to temporal requirements of the communication plan (KP) .

2. Method according to claim 1, **characterised in that** time windows are defined by the communication plan (KP) as temporal requirements, within which a use of a respective communication path defined by the bus interfaces (TPO to TPn, IP0 to IPn) is permitted (3) for access instances.

3. Method according to one of claims 1 to 2, **characterised in that** access instances which, due to the temporal requirements of the communication plan (KP), are not carried out successfully, are concluded with an error message (3).

4. Method according to one of claims 1 to 3, **characterised in that** the communication plan (KP) is transferred to the access manager (ZM) in a system initialisation phase.

5. Method according to one of claims 1 to 3, **characterised in that** the complementary logic (EL) is only activated by the access manager (ZM) after the system initialisation phase.

6. Method according to one of claims 1 to 4, **characterised in that** the access manager (ZM) is protected by a protection function.

7. Circuit arrangement (SA) for a temporal limiting and separating of access instances in a "system-on-a-chip" for carrying out the method according to the invention according to claims 1 to 5, comprising at least one master unit (MA1, MA2,..., MAn), at least one slave unit (S1, S2,..., Sn) and a "network-on-a-chip bus system" (NoC) with bus interfaces (TP0 to TPn, IP0 to IPn) for connecting master and slave units (MA1, MA2,..., MAn, S1, S2,..., Sn), **characterised in that** the network-on-a-chip bus system (NoC) is expanded by an adaptation unit (AE) and **in that** the adaptation unit (AE) consists of a central access manager (ZM) for central and temporal control of the access instances by means of a communication plan (KP) managed in the access manager (ZM) and a complementary logic (EL) for the bus interfaces (TPO to TPn, IP0 to IPn) of the network-on-a-chip bus system (NoC).

8. Circuit arrangement according to claim 7, **characterised in that** in a system initialisation phase, the communication plan (KP) is loadable into the access manager (ZM), and **in that** the complementary logic (EL) is activatable by the access manager (ZM).

9. Circuit arrangement according to one of claims 7 to 8, **characterised in that** the access manager (ZM) has a protection function against manipulations.

## Revendications

1. Procédé pour la limitation et la séparation dans le temps d'accès entre au moins une unité maître (MA1, MA2, ..., MAn) et au moins une unité esclave (S1, S2, ... , Sn) via ce qu'il est convenu d'appeler un système de bus réseau sur puce (NoC) dans un système monopuce, les accès entre l'au moins une unité maître (MA1, MA2, ... , MAn) et l'au moins une unité esclave étant réalisés via des chemins de communication qui sont imposés par des interfaces de bus (TPO à TPn, IP0 à IPn) du système de bus réseau sur puce (NoC), **caractérisé en ce que** le système de bus réseau sur puce (NoC) est élargi par une unité d'adaptation (AE) qui comprend (1) un gestionnaire d'accès central (ZM) et une logique complémentaire (EL) pour les interfaces de bus (TPO à TPn, IP0 à IPn) et **en ce que** l'unité d'adaptation (AE) et les interfaces de bus (TP0 à TPn, IP0 à IPn) sont alors commandées (2) de manière telle, via la logique complémentaire (EL), par le gestionnaire d'accès central (ZM), à l'aide d'un plan de communication (KP) géré dans le gestionnaire d'accès central (ZM), que des accès entre l'au moins une unité maître (MA1, MA2, ..., MAn) et l'au moins une unité esclave (S1, S2, ..., Sn) sont réalisés (3) via les chemins de communication respectivement imposés par les interfaces de bus (TP0 à TPn, IP0 à IPn) selon des spécifications temporelles du plan de communication (KP).

2. Procédé selon la revendication 1, **caractérisé en ce que** le plan de communication (KP) définit, en tant que spécifications temporelles, des fenêtres de temps dans lesquelles est respectivement autorisée (3), pour des accès, une utilisation d'un chemin de communication respectif imposé par les interfaces de bus (TP0 à TPn, IP0 à IPn).

3. Procédé selon l'une des revendications 1 à 2, **caractérisé en ce que** des accès qui sont exécutés sans succès sur la base des spécifications temporelles du plan de communication (KP) sont terminés (3) par un message d'erreur.

4. Procédé selon l'une des revendications 1 à 3, **caractérisé en ce que** le plan de communication (KP) est transmis au gestionnaire d'accès (ZM) dans une phase d'initialisation du système.

5. Procédé selon l'une des revendications 1 à 3, **caractérisé en ce que** la logique complémentaire (EL) n'est activée par le gestionnaire d'accès (ZM) qu'après la phase d'initialisation du système.

6. Procédé selon l'une des revendications 1 à 4, **caractérisé en ce que** le gestionnaire d'accès (ZM) est protégé par une fonction de protection.

7. Dispositif de commutation (SA) pour une limitation et une séparation dans le temps d'accès dans un système dit monopuce pour l'exécution du procédé de l'invention selon les revendications 1 à 5, composé d'au moins une unité maître (MA1, MA2, ..., MAn), d'au moins une unité esclave (S1, S2, ..., Sn) et de ce qu'il est convenu d'appeler un système de bus réseau sur puce (NoC) avec des interfaces de bus (TP0 à TPn, IP0 à IPn) pour relier les unités maîtres et esclaves (MA1, MA2, ..., MAn, S1, S2, ..., Sn), **caractérisé en ce que** le système de bus réseau sur puce (NoC) est élargi par une unité d'adaptation (AE) et **en ce que** l'unité d'adaptation (AE) se compose d'un gestionnaire d'accès central (ZM) pour la commande centrale et temporelle des accès au moyen d'un plan de communication (KP) géré dans le gestionnaire d'accès (ZM) et d'une logique complémentaire (EL) pour les interfaces de bus (TP0 à TPn, IP0 à IPn) du système de bus réseau sur puces (NoC).

8. Dispositif de commutation selon la revendication 7, **caractérisé en ce que**, dans une phase d'initialisation du système, le plan de communication (KP) peut être chargé dans le gestionnaire d'accès (ZM) et **en ce que** la logique complémentaire (EL) peut être activée par le gestionnaire d'accès (ZM).

9. Dispositif de commutation selon l'une des revendications 7 à 8, **caractérisé en ce que** le gestionnaire d'accès (ZM) comporte une fonction de protection contre les manipulations.
